# EUROPÄISCHE PATENTSCHRIFT

(11) **EP 3 696 054 B1**
(45) Veröffentlichungstag und Bekanntmachung des Hinweises auf die Patenterteilung: **31.08.2022**
(21) Anmeldenummer: 20150921.3
(22) Anmeldetag: 09.01.2020
(51) Int. Cl.: B62D 21/12, B62D 27/06, B62D 63/02

(54) **MODULAR AUFGEBAUTES FAHRZEUG-CHASSIS MIT HINTEREM RAHMENÜBERHANG**
MODULAR VEHICLE CHASSIS WITH REAR FRAME OVERHANG
CHÂSSIS VÉHICULE MODULAIRE POURVU DE PORTE À FAUX ARRIÈRE

(30) Priorität: 15.02.2019 DE 102019103864
(43) Veröffentlichungstag der Anmeldung: 19.08.2020
(73) Patentinhaber: MAN Truck & Bus SE, 80995 München (DE)
(72) Erfinder: Sattler, Steve, 80992 München (DE); Hintereder, Jürgen, 83313 Siegsdorf (DE); Jahn, Danilo, 80809 München (DE)
(74) Vertreter: v. Bezold & Partner Patentanwälte - PartG mbB

(56) Entgegenhaltungen:
- EP-A1- 0 528 144
- EP-A1- 2 554 458
- EP-A2- 2 711 270
- WO-A1-00/37301

## Beschreibung

Die Erfindung betrifft eine Fahrzeugkonstruktion, insbesondere ein Nutzfahrzeug-Chassis, vorzugsweise mit einer Vielzahl von Tragstrukturen, die jeweils ein Fahrzeug-Chassis-Modul bilden. Die Fahrzeugkonstruktion kann z. B. 2-achsig, 3-achsig oder mehrachsig ausgebildet sein, z. B. 2 oder 3 Hinterachsen aufweisen.

Zum allgemeinen Stand der Technik kann zunächst auf die WO 00/37301 A1 und die EP 2 711 270 A2 verwiesen werden, aus denen bereits Fahrzeugkonstruktionen mit Tragstruktur und Rahmenüberhang bekannt sind.

Im Stand der Technik sind sogenannte leiterrahmenförmige Nutzfahrzeug-Chassis mit zwei in Querrichtung voneinander beabstandeten einstückig-integral durchgängigen Längsträgern bekannt.

Derartige Nutzfahrzeug-Chassis werden in Abhängigkeit der Fahrzeuganwendung (z. B. Sattelzugmaschine, Kipper-Lastkraftwagen, etc.) konstruiert und weisen deshalb in Abhängigkeit der Fahrzeuganwendung z. B. unterschiedliche Längen, Breiten, Stärken, etc. auf. An die Nutzfahrzeug-Chassis sind ebenfalls in Abhängigkeit der Fahrzeuganwendung Funktionskomponenten (z. B. verschiedene Tanks, Motoren, Batterien, etc.) anmontiert. Einmal definiert und produziert bleibt das jeweilige Nutzfahrzeug-Chassis mitsamt seinen anmontierten Funktionskomponenten im Laufe der Fahrzeuglebensdauer üblicherweise unverändert bestehen. Nachträgliche Veränderungen sind, wenn überhaupt, nur mit erheblichem Umbauund Anpassungsaufwand zu realisieren und führen zugleich meist zu einem Eingriff in die Fahrzeugstatik.

Die Anordnung der Funktionskomponenten am Nutzfahrzeug-Chassis wird vom zur Verfügung stehenden Raum beeinflusst. Dadurch ergeben sich Zwänge hinsichtlich der Anordnung von insbesondere großen Funktionskomponenten, deren technische Lösung meist in einer Stückelung der großen Funktionskomponenten besteht, z. B. die Stückelung eines großen Tanks in mehrere kleinere Tanks, wozu oftmals auch varianztreibende Adapterlösung erforderlich sind.

Eine Aufgabe der Erfindung ist es, eine bessere und/oder alternative Fahrzeugkonstruktion zu schaffen, insbesondere eine Fahrzeugkonstruktion, die unterschiedliche Chassis-Konstruktionen vorteilhaft miteinander vereinen kann.

Diese Aufgabe wird mit den Merkmalen des Hauptanspruchs gelöst. Vorteilhafte Weiterbildungen sind in den Unteransprüchen offenbart oder ergeben sich aus der folgenden Beschreibung bevorzugter Ausführungsformen der Erfindung.

Die Erfindung schafft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis, z. B. Lastkraftwagen- oder Transporter-Chassis.

Die Fahrzeugkonstruktion umfasst vorzugsweise eine Vielzahl von Tragstrukturen, die jeweils ein Fahrzeug-Chassis-Modul bilden können.

Die Fahrzeugkonstruktion zeichnet sich vor allem dadurch aus, dass sie eine insbesondere hintere Tragstruktur aufweist, die ein z. B. modular austauschbares Fahrzeug-Chassis-Modul bildet, vorzugsweise mehrere Anschlussknoten umfassen kann und an dem eine FahrzeugHinterachse montiert ist, und die zusätzlich einen Rahmenüberhang zweckmäßig in Längsrichtung der Fahrzeugkonstruktion hinter der hinteren Tragstruktur umfasst. Die Hinterachse ist z. B. eine hinterste Hinterachse der Fahrzeugkonstruktion.

Es ist möglich, dass der Rahmenüberhang z. B. zwei zweckmäßig in Querrichtung der Fahrzeugkonstruktion voneinander beabstandete Längsträger umfasst, die z. B. über zwei zweckmäßig in Querrichtung der Fahrzeugkonstruktion voneinander beabstandete Konsolen (z. B. Adapter) an die hintere Tragstruktur angebunden werden können.

Es ist möglich, dass der Rahmenüberhang einen Leiterrahmen bildet und/oder die zwei Längsträger jeweils aus einem U-, I- oder L-Profil ausgebildet sind.

Es ist möglich, dass der Rahmenüberhang einen Leiterrahmen bildet und/oder die zwei Längsträger jeweils aus einem U-, I- oder L-Profil ausgebildet sind, so dass der Rahmenüberhang ein vorzugsweise klassisches Rahmenende bilden kann. Die zwei Längsträger sind vorzugsweise zwei durchgängige Längsträger und/oder bilden z. B. kein gitterrohrrahmenförmiges Raumtragwerk.

Die zwei Konsolen können z. B. jeweils eine nach hinten abstehende Anschlusskonstruktion (z. B. mit einer Vielzahl an Befestigungslöchern) aufweisen, an die vorzugsweise jeweils einer der Längsträger befestigt ist, vorzugsweise angeschraubt oder angeschweißt ist.

Es ist möglich, dass die zwei Konsolen für die zwei Längsträger jeweils ein Lager zur Bildung eines Formschlusses aufweisen, vorzugsweise im Wesentlichen in Höhenrichtung der Fahrzeugkonstruktion.

An die zwei Lager kann z. B. jeweils einer der Längsträger angeschraubt oder angeschweißt werden.

Die Lager stehen vorzugsweise von den Konsolen nach innen ab.

Zwischen den Konsolen, vorzugsweise zwischen den Anschlusskonstruktionen, kann ein Querträger verlaufen, z. B. zur Verbindung der zwei Längsträger und/oder der Konsolen. Dabei können die Konsolen jeweils insbesondere ermöglichen, dass mit der Verbindung, insbesondere Verschraubung zum Längsträger auch die Verbindung, insbesondere Verschraubung zum Querträger hergestellt werden kann. Die Position des Querträgers ist vorzugsweise so gewählt, dass ein begünstigter Steifigkeitsverlauf zwischen Längsträger und Konsolen ermöglicht wird.

Die Konsolen können z. B. von den zwei Längsträgern nach unten abstehen und/oder nach unten vorzugsweise steifigkeits- und gewichtsoptimiert verjüngt ausgeführt sein.

Der Rahmenüberhang kann eine Länge in Längsrichtung der Fahrzeugkonstruktion aufweisen und die hintere Tragstruktur kann eine Länge in Längsrichtung der Fahrzeugkonstruktion aufweisen, wobei die Länge des Rahmenüberhangs im Vergleich zur Länge der hinteren Tragstruktur z. B. größer, im Wesentlichen gleich oder kleiner sein kann.

Die Fahrzeugkonstruktion kann eine Vielzahl von Tragstrukturen umfassen, die jeweils ein Fahrzeug-Chassis-Modul bilden, jeweils mehrere Anschlussknoten aufweisen und die jeweils über vorzugsweise vier Anschlussknoten-Paare (zweckmäßig benachbarte Anschlussknoten) z. B. lösbar miteinander verbunden sein können.

Die hinteren unteren Anschlussknoten müssen nicht zwangsläufig auf gleicher Höhe sein wie die vorderen unteren Anschlussknoten. Die oberen Anschlussknoten hingegen befinden sich vorzugsweise am oberen Ende des maximal zulässigen Bauraums.

Die Fahrzeugkonstruktion kann z. B. zumindest zwei, zumindest drei, zumindest vier oder zumindest fünf Tragstrukturen aufweisen, die jeweils vorzugsweise ein Fahrzeug-Chassis-Modul bilden.

Die zwei Konsolen können jeweils zumindest zwei oder zumindest drei insbesondere im Wesentlichen in Höhenrichtung der Fahrzeugkonstruktion voneinander beabstandete Anschlussstellen zum Anschließen jeweils eines Anschlussknotens der hinteren Tragstruktur zur Verfügung stellen. Hierzu können die Konsolen z. B. zumindest zwei insbesondere im Wesentlichen in Höhenrichtung der Fahrzeugkonstruktion voneinander beabstandete diskrete Anschlussstellen oder eine Anschlussschiene aufweisen. Die voneinander beabstandeten diskreten Anschlussstellen und/oder die Anschlussschiene ermöglichen insbesondere, dass Anschlussknoten in unterschiedlicher Höhe angeschlossen werden können, was z. B. ermöglicht, dass die Konsolen zum Anschließen z. B. unterschiedlich hoher hinterer Tragstrukturen geeignet sind.

Die Konsolen und die hintere Tragstruktur können z. B. über zumindest zwei oder zumindest vier Anschlussknoten-Paare (zweckmäßig benachbarte Anschlussknoten der Konsolen und der hinteren Tragstruktur) vorzugsweise lösbar miteinander verbunden sein.

Zumindest zwei Anschlussknoten-Paare der Tragstrukturen sind mittels jeweils einer Klemmverbindung lösbar miteinander verbunden und/oder mittels jeweils zumindest einem im Wesentlichen in Querrichtung der Fahrzeugkonstruktion erstreckenden Spannelement (z. B. Spannschraube) lösbar miteinander verbunden. Alternativ oder ergänzend sind zumindest zwei Anschlussknoten-Paare der Konsolen und der hinteren Tragstruktur mittels jeweils einer Klemmverbindung lösbar miteinander verbunden und/oder mittels jeweils zumindest einem im Wesentlichen in Querrichtung der Fahrzeugkonstruktion erstreckenden Spannelement (z. B. Spannschraube) lösbar miteinander verbunden.

Es können alle vier oder nur einige der vier Anschlussknoten-Paare, z. B. nur zwei der Anschlussknoten-Paare, mit der Klemmverbindung wie hierin offenbart verbunden sein. Es ist also möglich, dass zwei Tragstrukturen über unterschiedliche Anschlussknoten und/oder unterschiedliche Anschlussknoten-Verbindungen lösbar miteinander verbunden sind.

Die Klemmverbindung kann jeweils zwei Klemmbacken und/oder z. B. zumindest ein Spannelement umfassen, wobei es vorzugsweise möglich ist, dass die zwei Klemmbacken über das Spannelement (z. B. eine zweckmäßig zentrale Spannschraube) zueinander hin beaufschlagbar sind.

Das Spannelement kann vorzugsweise die zwei Klemmbacken z. B. im Wesentlichen in Querrichtung der Fahrzeugkonstruktion zueinander hin beaufschlagen. Alternativ oder ergänzend können z. B. die zwei Klemmbacken die Anschlussknoten-Paare im Wesentlichen in Längsrichtung der Fahrzeugkonstruktion zueinander hin beaufschlagen, z. B. über eine Kraftumlenkung mittels der unten beschriebenen Kulissen.

Das Spannelement erstreckt sich vorzugsweise im Wesentlichen in Querrichtung der Fahrzeugkonstruktion. Die Spannrichtung, z. B. Verschraubungsrichtung, kann folglich vorzugsweise im Wesentlichen der Querrichtung der Fahrzeugkonstruktion entsprechen.

Die Klemmverbindung kann z. B. auch zwei Spannelemente aufweisen, z. B. jeweils ein Spannelement pro Anschlussknoten.

Im Kontext der Erfindung können die zwei Klemmbacken relativ zu den benachbarten Anschlussknoten z. B. lösbare und/oder separate Bauteile sein, wobei es auch möglich ist, dass einer der Klemmbacken unlösbar, z. B. einstückig-integral, an einem der benachbarten Anschlussknoten ausgebildet ist, z. B. angeformt, angegossen, angeschmiedet, angeschweißt, etc. ist.

Einer der Klemmbacken kann somit z. B. unlösbar und/oder einstückig integral an einem der benachbarten Anschlussknoten ausgebildet sein.

Das Spannelement erstreckt sich vorzugsweise im Wesentlichen in Querrichtung der Fahrzeugkonstruktion und ist z. B. von seitlich außen zum Spannen und/oder Lösen betätigbar.

Es ist möglich, dass die benachbarten Anschlussknoten z. B. zur Anlage der Klemmbacken zwei im Wesentlichen komplementär geformte (z. B. im Wesentlichen U- oder C-förmige) Kulissen bilden. Die (vorzugsweise schräge Anlagenflächen aufweisende) Kulissen können z. B. mit den Klemmbacken eine Kraftumlenkung erzeugen, so dass die benachbarten Anschlussknoten zueinander hin beaufschlagt werden können, insbesondere im Wesentlichen in Längsrichtung der Fahrzeugkonstruktion.

Die zwei Klemmbacken können z. B. im Wesentlichen U- oder C-förmig ausgebildet sein.

Es ist möglich, dass die Tragstrukturen jeweils zwei in Querrichtung der Fahrzeugkonstruktion voneinander beabstandete Längsträgersegmente aufweisen, die z. B. beidseitig über Anschlussknoten-Paare vorzugsweise wie hierin offenbart (z. B. über die Klemmverbindung und/oder zumindest ein im Wesentlichen in Querrichtung der Fahrzeugkonstruktion erstreckendes Spannelement) lösbar miteinander verbunden sind und vorzugsweise mit dem Rahmenüberhang, insbesondere den zwei Längsträgern, in Querrichtung der Fahrzeugkonstruktion voneinander beabstandete Chassis-Längsträgerkonstruktionen bilden.

Es ist möglich, dass die Hinterachse als Triebachse oder vorzugsweise nicht angetriebene Laufachse (z. B. Nachlaufachse) ausgebildet ist.

Eine der Tragstrukturen, vorzugsweise die hintere Tragstruktur, kann z. B. eine als Triebachse ausgebildete Hinterachse aufweisen. Eine der Tragstrukturen, vorzugsweise die hintere Tragstruktur, kann z. B. eine als Nachlaufachse ausgebildete Hinterachse aufweisen.

So ist es z. B. möglich, dass die hinterste Tragstruktur eine Nachlaufachse oder Triebachse aufweist und die Tragstruktur in Längsrichtung der Fahrzeugkonstruktion davor eine Triebachse oder insbesondere nicht angetriebene Vorlaufachse aufweist.

Es ist möglich, dass zwischen einer eine Vorderachse aufweisenden Tragstruktur und der die Hinterachse aufweisenden Tragstruktur zumindest eine, zumindest zwei oder zumindest drei weitere ein Fahrzeug-Chassis-Modul bildende Tragstrukturen angeordnet sind.

Es ist möglich, dass die Tragstrukturen insbesondere lösbar tragstrukturell und/oder wiederholt montierbar miteinander verbunden sind, z. B. über benachbarte Anschlussknoten, insbesondere Anschlussknoten-Paare.

Die jeweilige Tragstruktur kann z. B. zumindest einen, vorzugsweise zumindest zwei in Längsrichtung der Fahrzeugkonstruktion voneinander beabstandete Querträgersegmente (z. B. eine oder mehrere Schubaussteifungen, Ringspanten und/oder Schubbleche) aufweisen, vorzugsweise zwei obere in Längsrichtung der Fahrzeugkonstruktion voneinander beabstandete Querträgersegmente und/oder zwei untere in Längsrichtung der Fahrzeugkonstruktion voneinander beabstandete Querträgersegmente.

Es ist möglich, dass die jeweilige Tragstruktur (z. B. einzelne und/oder separate) Anschlussknoten aufweist. Die Anschlussknoten können zweckmäßig z. B. lösbar oder unlösbar in die jeweilige Tragstruktur integriert sein.

Es ist möglich, dass die Anschlussknoten der jeweiligen Tragstruktur zur vorzugsweise lösbaren und/oder wiederholt montierbaren Verbindung oder unlösbaren Verbindung mit jeweils einem Längsträgersegment, einem Querträgersegment und/oder einem Vertikalträgersegment der jeweiligen Tragstruktur dienen. Auch hier können alternativ oder ergänzend z. B. diagonal verlaufende Trägersegmente zum Einsatz kommen.

Es ist möglich, dass die Längsträgersegmente der Tragstrukturen über benachbarte Anschlussknoten miteinander verbunden sind und in Querrichtung der Fahrzeugkonstruktion voneinander beabstandete Chassis-Längsträgerkonstruktionen bilden.

Im Kontext der Erfindung können somit insbesondere Zug- und/oder Druckkräfte in den Längsträgersegmenten über die benachbarten Anschlussnoten vorteilhaft übertragen werden.

Es ist möglich, dass benachbarte Anschlussknoten der Tragstrukturen zur lösbaren Verbindung und/oder wiederholt montierbaren Verbindung der Tragstrukturen miteinander dienen, so dass die Tragstrukturen über lösbar aneinander montierte Anschlussknoten (zweckmäßig Anschlussknoten-Paare) miteinander verbunden sein können.

Benachbarte Anschlussknoten können somit vorzugsweise lösbar aneinander montiert sein und/oder Anschlussknoten-Paare bilden.

Es ist möglich, dass aneinander montierte benachbarte Anschlussknoten im Wesentlichen in Längsrichtung der Fahrzeugkonstruktion auf Stoß aneinander anliegen, und/oder z. B. über jeweils eine in Höhen- und in Querrichtung der Fahrzeugkonstruktion ausgerichtete Schnittebene voneinander trennbar sind.

Die jeweilige Tragstruktur kann z. B. vier vordere Anschlussknoten und/oder vier hintere Anschlussknoten aufweisen, wobei die vier vorderen Anschlussknoten und/oder die vier hinteren Anschlussknoten z. B. Eckpunkte der jeweiligen Tragstruktur bilden können.

Es ist möglich, dass die jeweilige Tragstruktur eine im Wesentlichen Quaderform bildet und die Quaderform z. B. durch die Anschlussknoten und alternativ oder ergänzend durch die Längsträgersegmente, die Querträgersegmente und/oder die Vertikalträgersegmente der jeweiligen Tragstruktur definiert wird. Dadurch können im Wesentlichen quaderförmige Tragstrukturen erzeugt werden.

Es ist möglich, dass die jeweilige Tragstruktur als (z. B. im Wesentlichen quaderförmige) Gitter- oder Geripperahmenkonstruktion ausgebildet ist.

Die Tragstrukturen sind vorzugsweise selbstragend ausgebildet (und insbesondere entsprechend ihrer Aufgabe in der Gesamttragstruktur dimensioniert).

Die Fahrzeugkonstruktion ist z. B. modular, insbesondere modulbaukastenartig, umkonfigurierbar, insbesondere auch nach der ursprünglichen Endmontage der Fahrzeugkonstruktion.

Zu erwähnen ist, dass die hierin erwähnte "lösbare Verbindung" vorzugsweise ausgeführt sein kann, so dass die lösbar miteinander verbundenen Teile insbesondere wiederholt montierbar sind, also z. B. mehrfach voneinander getrennt und wieder aneinander montiert werden können.

Die hintere Tragstruktur stellt vorzugsweise die hinterste ein Fahrzeug-Chassis-Modul bildende Tragstruktur der Fahrzeugkonstruktion dar. Alternativ oder ergänzend weist die hintere Tragstruktur vorzugsweise die hinterste Fahrzeug-Achse auf (z. B. Trieb- oder Nachlaufachse).

Die Konsolen können jeweils als z. B. Guss-, Blech- oder Schmiedekonstruktion ausgebildet sein. Auch eine Fräs- und/oder Sinterkonstruktion ist möglich.

Zu erwähnen ist noch, dass die Längsrichtung der Fahrzeugkonstruktion im Kontext der Erfindung z. B. im Wesentlichen parallel zur Mittelachse der Fahrzeugkonstruktion verlaufen kann und/oder z. B. durch die Längserstreckung der Längsträgersegmente definiert werden kann.

Die Längsträgersegmente können z. B. mit einer Abweichung im Bereich von max. ungefähr +/-35, +/-25°, +/-10° oder +/-5° schräg zur Mittelachse der Fahrzeugkonstruktion verlaufen.

Die Querrichtung und/oder Höhenrichtung der Fahrzeugkonstruktion kann zweckmäßig im Wesentlichen rechtwinklig (z. B. mit einer Abweichung im Bereich von max. ungefähr +/-35, +/-25°, +/-10° oder +/-5°) zur Mittelachse der Fahrzeugkonstruktion ausgerichtet sein.

Die benachbarten Anschlussknoten können jeweils z. B. als ein Blechteil oder ein Guss-, Schmiede- oder Frästeil ausgebildet sein und folglich vorzugsweise mittels eines Guss-, Schmiede- oder Fräsverfahrens hergestellt sein.

Die Erfindung umfasst auch ein Gesamtfahrzeug z. B. in Form eines Nutzfahrzeugs, vorzugsweise ein Lastkraftwagen (z. B. Sattelzugmaschine oder Transporter), mit einer Fahrzeugkonstruktion wie hierin offenbart.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine perspektivische Ansicht einer Fahrzeugkonstruktion gemäß einer Ausführungsform der Erfindung,
- Figur 2: zeigt eine perspektivische Ansicht einer als Fahrzeug-Chassis-Modul ausgebildeten Tragstruktur gemäß einer Ausführungsform der Erfindung,
- Figur 3: zeigt eine perspektivische Ansicht einer als Fahrzeug-Chassis-Modul ausgebildeten Tragstruktur gemäß einer anderen Ausführungsform der Erfindung,
- Figur 4: zeigt eine perspektivische Darstellung einer Fahrzeugkonstruktion gemäß einer anderen Ausführungsform der Erfindung,
- Figur 5A bis 5C: zeigen unterschiedlichen Ansichten eines hinteren Rahmenendes gemäß einer Ausführungsform der Erfindung,
- Figur 6A bis 6C: zeigen unterschiedlichen Ansichten eines hinteren Rahmenendes gemäß einer Ausführungsform der Erfindung
- Figur 7: zeigt eine perspektivische Detailansicht eines hinteren Rahmenendes gemäß einer Ausführungsform der Erfindung, und
- Figur 8: zeigt ein Knotenkonzept zur Verbindung eines Anschlussknoten-Paares (zweckmäßig benachbarte Anschlussknoten) für eine Fahrzeugkonstruktion gemäß einer Ausführungsform der Erfindung.

Die in den Figuren beschriebenen bevorzugten Ausführungsformen der Erfindung stimmen teilweise überein, wobei für ähnliche oder identische Teile die gleichen Bezugszeichen verwendet werden und zu deren Erläuterung auch auf die Beschreibung der anderen Ausführungsformen verwiesen werden kann. Der Übersichtlichkeit halber sind nicht alle Teile in allen Figuren mit Bezugszeichen versehen.

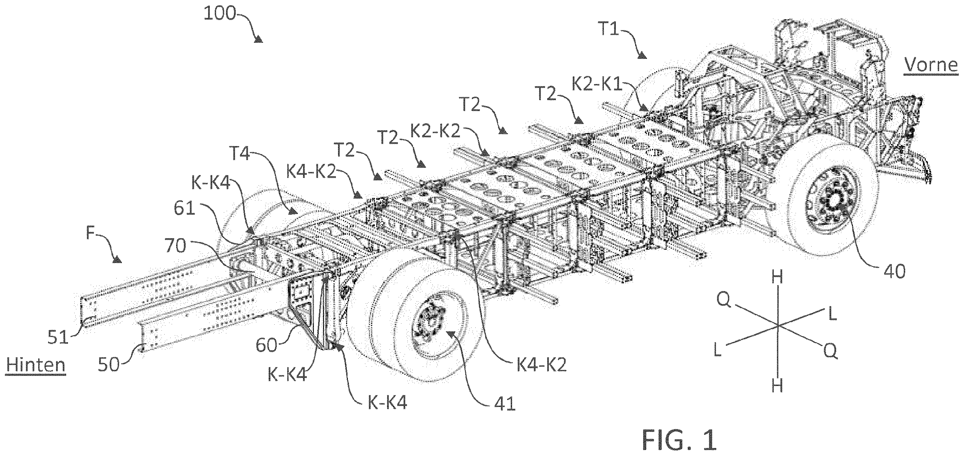

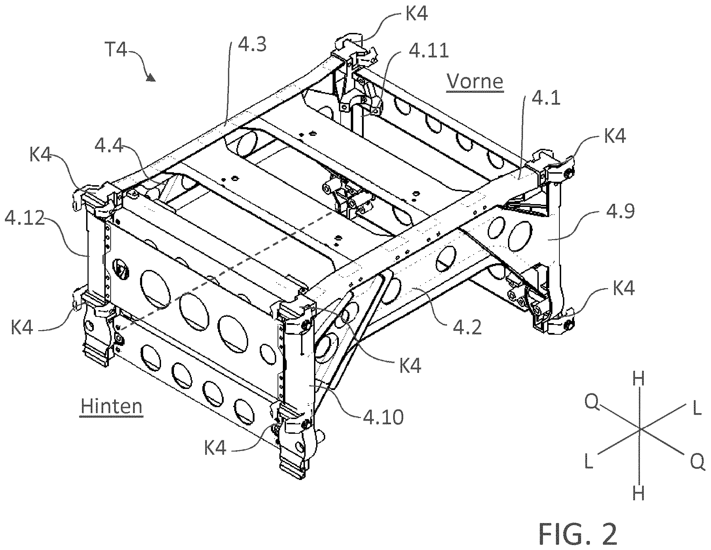

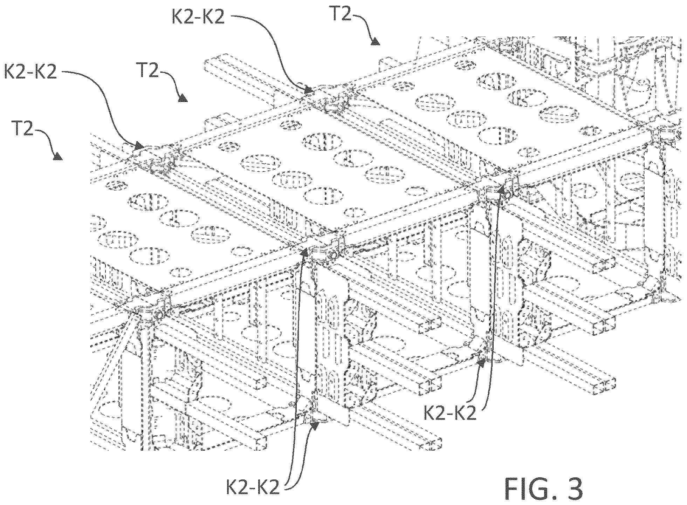

Figur 1 zeigt eine perspektivische Ansicht einer beispielhaften Fahrzeugkonstruktion 100 gemäß einer Ausführungsform der Erfindung. Figur 2 zeigt eine perspektivische Ansicht einer als Fahrzeug-Chassis-Modul ausgebildeten Tragstruktur T4 gemäß einer Ausführungsform der Erfindung, während Figur 3 eine perspektivische Ansicht einer anderen als Fahrzeug-Chassis-Modul ausgebildeten Tragstruktur T2 gemäß einer Ausführungsform der Erfindung zeigt.

Die Fahrzeugkonstruktion 100 ist zweckmäßig als ein in ihrer Längsrichtung L tragstrukturell und vorzugsweise funktionell modular aufgebautes Fahrzeug-Chassis für ein Gesamtfahrzeug in Form eines Nutzfahrzeugs ausgeführt.

Die Fahrzeugkonstruktion 100 umfasst eine Vielzahl an Tragstrukturen T1, T2 und T4, die jeweils ein Fahrzeug-Chassis-Modul bilden.

Die Tragstruktur T1 bildet ein Vorderachsmodul und weist eine Fahrzeug-Vorderachse 40 auf.

Die Tragstruktur T4 ist in Längsrichtung L der Fahrzeugkonstruktion 100 die hinterste als Fahrzeug-Chassis-Modul ausgebildete Tragstruktur und umfasst eine Triebachse 41 zum Antreiben der Fahrzeugkonstruktion 100 und somit des Nutzfahrzeugs.

Zwischen der Tragstruktur T1 und der Tragstruktur T4 sind beispielhaft vier weitere Tragstrukturen T2 angeordnet, die einheitlich mit dem Bezugszeichen T2 gekennzeichnet sind.

Insbesondere Figur 2 kann entnommen werden, dass die hintere Tragstruktur T4 vorzugsweise zwei obere, hintere und in Querrichtung Q der Fahrzeugkonstruktion 100 voneinander beabstandete Anschlussknoten K4 aufweist und optional auch zwei untere, hintere und in Querrichtung Q der Fahrzeugkonstruktion 100 voneinander beabstandete Anschlussknoten K4 umfassen kann.

Darüber hinaus umfasst die Tragstruktur T4 vorzugsweise zwei obere, vordere und in Querrichtung Q der Fahrzeugkonstruktion 100 voneinander beabstandete Anschlussknoten K4 und z. B. zwei untere, vordere und in Querrichtung Q der Fahrzeugkonstruktion 100 voneinander beabstandete Anschlussknoten K4.

Die Tragstruktur T4 umfasst zweckmäßig beidseitig zwei in Höhenrichtung H der Fahrzeugkonstruktion 100 voneinander beabstandete Längsträgersegmente 4.1 bis 4.4 und beidseitig zwei in Längsrichtung L der Fahrzeugkonstruktion 100 voneinander beabstandete Vertikalträgersegmente 4.9 bis 4.12 und zusätzlich mehrere obere in Längsrichtung L der Fahrzeugkonstruktion 100 voneinander beabstandete Querträgersegmente, die allerdings nicht mit Bezugszeichen versehen sind. Zu beachten ist, dass z. B. die Längsträgersegmente 4.1 und 4.2 auch durch ein Längsträgersegment ersetzt werden können, ebenso die Längsträgersegmente 4.3 und 4.4.

Ein Vergleich der Figuren 2 und 3 zeigt, dass die Tragstruktur T4 sich von den Tragstrukturen T2 unterscheidet, insbesondere deshalb, weil in die Tragstruktur T4 die Hinterachse 41 integriert ist.

Die Fahrzeugkonstruktion 100 umfasst in Längsrichtung L der Fahrzeugkonstruktion 100 hinter der hinteren Tragstruktur T4 einen Rahmenüberhang F.

Der Rahmenüberhang F umfasst zwei Längsträger 50, 51, die z. B. als U-Profil ausgebildet sind, aber auch z. B. als I- oder L-Profil ausgebildet sein können. Der Rahmenüberhang F ist somit als insbesondere klassischer Rahmenüberhang ausgebildet.

Die zwei Längsträger 50, 51 sind über zwei Konsolen 60, 61 mit der hinteren Tragstruktur 4 tragstrukturell verbunden.

Die Konsolen 60, 61 umfassen zumindest zwei in Querrichtung Q der Fahrzeugkonstruktion 100 voneinander beabstandete Anschlussknoten K (vorzugsweise zwei obere und optional zwei untere Anschlussknoten K) und zwar zur lösbaren Verbindung mit den zuvor erwähnten hinteren Anschlussknoten K4 der Tragstruktur T4.

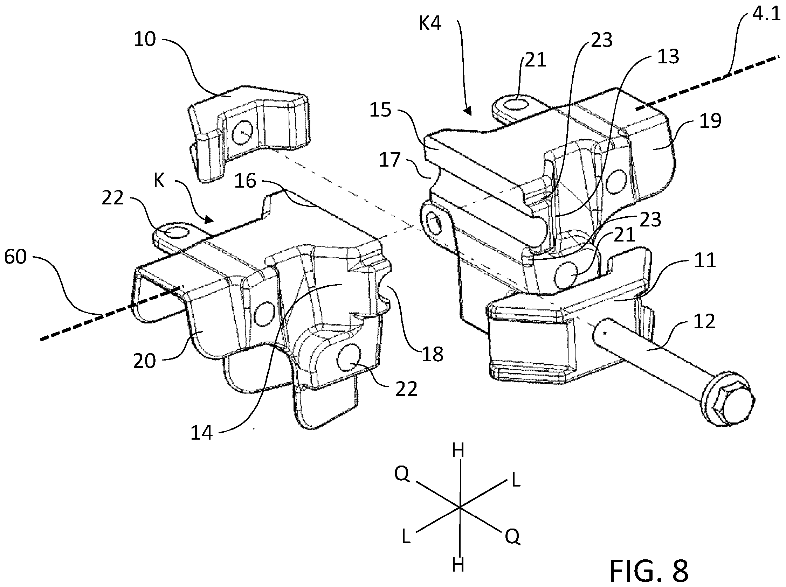

Somit ist es möglich, dass die Konsolen 60, 61 und die hintere Tragstruktur T4 über, vorzugsweise zumindest zwei oder zumindest vier, Anschlussknoten-Paare K1-K4 lösbar miteinander verbunden sind und zwar vorzugsweise über ein wie z. B. in Figur 8 gezeigtes Knotenkonzept.

Es ist möglich, dass auch die zur Tragstruktur T4 benachbarte Tragstruktur T2 z. B. vier Anschlussknoten K2 aufweist und die Tragstruktur T4 und die Tragstruktur T2 über vorzugsweise vier Anschlussknoten-Paare K4-K2 vorzugsweise lösbar miteinander verbunden sind und zwar vorzugsweise über ein wie z. B. in Figur 8 gezeigtes Knotenkonzept.

Auch zwei benachbarte Tragstrukturen T2 können über z. B. vier wie zuvor beschriebene Anschlussknoten-Paare K2-K2 vorzugsweise lösbar miteinander verbunden sein, zweckmäßig ebenfalls über ein wie in Figur 8 gezeigtes Knotenkonzept.

Auch die Tragstruktur T1 kann mit einer Tragstruktur T2 über z. B. vier wie zuvor beschriebene Anschlussknoten-Paare K2-K1 vorzugsweise lösbar verbunden sein, zweckmäßig ebenfalls über ein wie in Figur 8 gezeigtes Knotenkonzept.

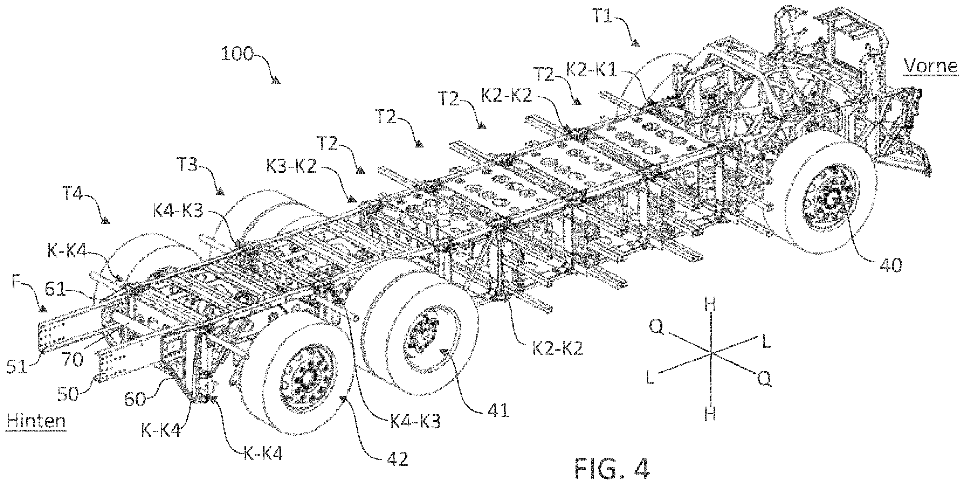

Figur 4 zeigt eine perspektivische Ansicht einer Fahrzeugkonstruktion 100 gemäß einer anderen Ausführungsform der Erfindung.

Eine Besonderheit der in Figur 4 gezeigten Ausführungsform ist, dass die hintere Tragstruktur 4 eine Nachlaufachse 42 aufweist und eine unmittelbar vor der hinteren Tragstruktur T4 angeordnete Tragstruktur T3 eine Triebachse 41 zum Antreiben der Fahrzeugkonstruktion 100 und somit des Nutzfahrzeugs aufweist.

Die Tragstruktur T3 kann ähnlich wie die in Figur 2 gezeigte Tragstruktur T4 ausgeführt sein.

Auch bei dieser Ausführungsform können die Konsolen 60, 61 und die hintere Tragstruktur T4 über, vorzugsweise zumindest zwei oder zumindest vier, Anschlussknoten-Paare K-K4 lösbar miteinander verbunden sein und zwar z. B. über ein wie in Figur 8 gezeigtes Knotenkonzept.

Auch die Tragstrukturen T4 und T3 können über vorzugsweise vier wie bereits beschriebene Anschlussknoten-Paare K4-K3 zweckmäßig lösbar miteinander verbunden sein und zwar ebenso vorteilhaft über ein wie in Figur 8 gezeigtes Knotenkonzept. Das gleiche gilt auch für die Tragstrukturen T3 und T2 und somit die Anschlussknoten-Paare K3-K2.

Den Figuren 1 bis 4 kann z. B. entnommen werden, dass Längsträgersegmente der Tragstrukturen T1, T2, T3, T4 und die Längsträger 50, 51 beidseitig über Anschlussknoten-Paare K-K4, K4-K3, K3-K2, K2-K2, K2-K1 miteinander verbunden sind und in Querrichtung Q der Fahrzeugkonstruktion 100 voneinander beabstandete Chassis-Längsträgerkonstruktionen bilden.

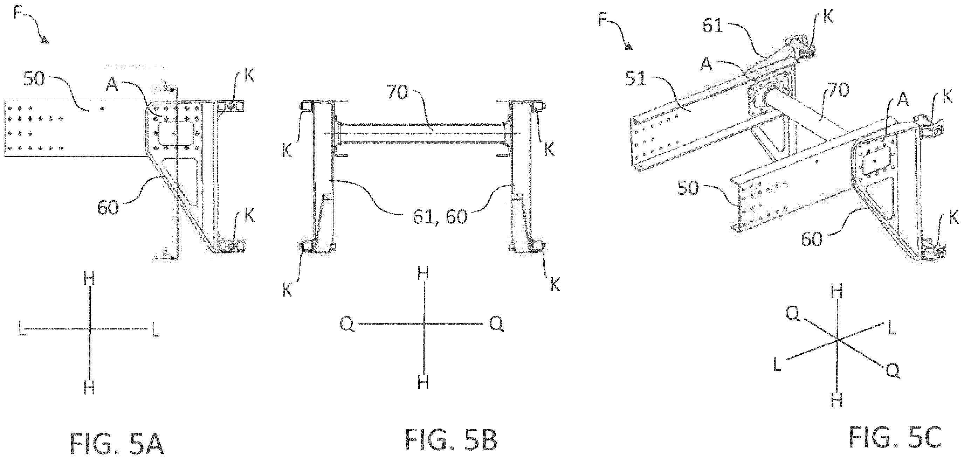

Die Figuren 5A bis 5C zeigen unterschiedliche Ansichten eines hinteren Teils einer Fahrzeugkonstruktion 100 gemäß einer Ausführungsform der Erfindung.

Die Figuren 5A bis 5C zeigen insbesondere einen hinteren Rahmenüberhang F zum Anordnen hinter einer hinteren Tragstruktur T4, insbesondere hinter der hintersten als Fahrzeug-Chassis-Modul ausgebildeten Tragstruktur T4 der Fahrzeugkonstruktion 100.

Der Rahmenüberhang F umfasst zwei als U-Profile ausgebildete Längsträger 50, 51, die über zwei Konsolen 60, 61 an die hintere Tragstruktur T4 angebunden werden können. Der Rahmenüberhang F ist als Leiterrahmen ausgeführt.

Die zwei Konsolen 60, 61 umfassen jeweils eine nach hinten abstehende Anschlusskonstruktion A, an die jeweils einer der Längsträger 50, 51 befestigt ist, z. B. angeschraubt oder angeschweißt ist.

Zwischen den Konsolen 60, 61 und zwar insbesondere zwischen den Anschlusskonstruktionen A ist ein Querträger 70 zur Verbindung der zwei Längsträger 50, 51 angeordnet und ebenfalls an die Konsolen 60, 61 und/oder die Längsträger 50, 51 montiert.

Die Konsolen 60, 61 stehen von den zwei Längsträgern 50, 51 nach unten ab und verjüngen sich vorzugsweise nach unten.

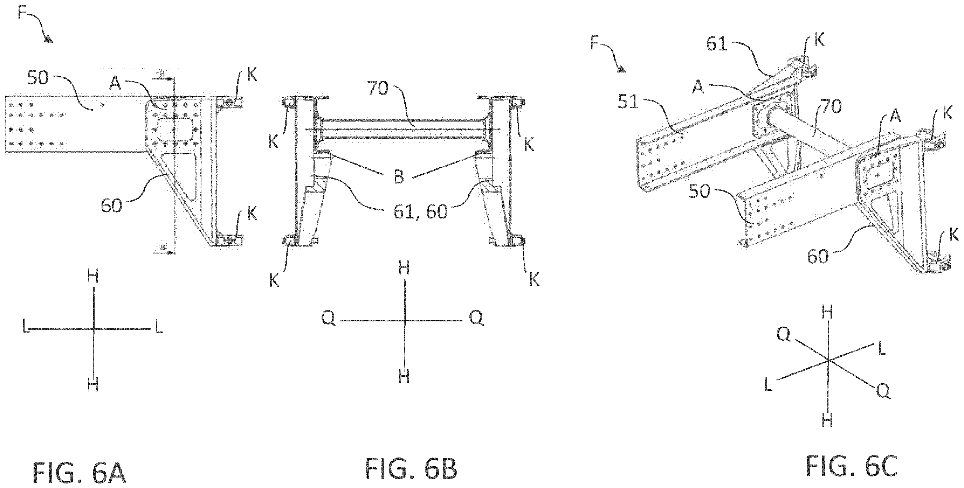

Die Figuren 6A bis 6C zeigen unterschiedliche Ansichten eines hinteren Teils einer Fahrzeugkonstruktion 100 gemäß einer anderen Ausführungsform der Erfindung.

Eine Besonderheit der in den Figuren 6A bis 6C gezeigten Ausführungsform ist, dass die zwei Konsolen 60, 61 für die zwei Längsträger 50, 51 jeweils ein nach innen erstreckendes Lager B zur Bildung eines Formschlusses in Höhenrichtung H der Fahrzeugkonstruktion 100 aufweisen und an die zwei Lager B jeweils einer der Längsträger 50, 51 aufgelegt, angeschraubt oder angeschweißt werden kann.

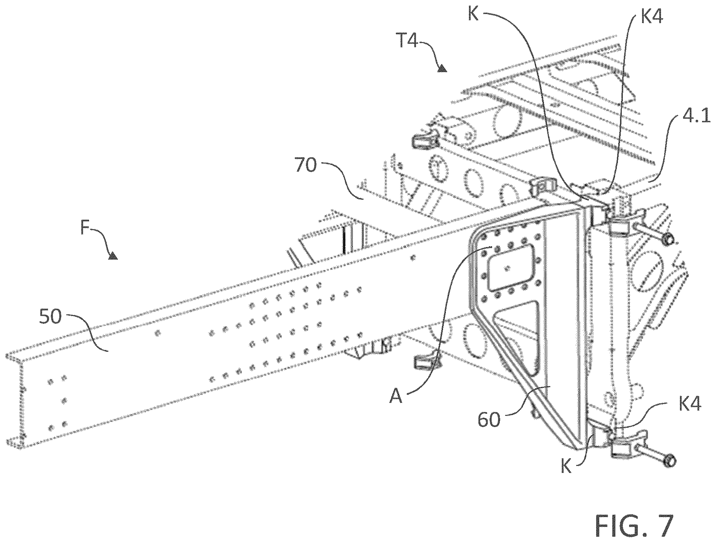

Figur 7 zeigt eine perspektivische Detailansicht eines hinteren Rahmenendes gemäß einer Ausführungsform der Erfindung und zwar insbesondere des Rahmenüberhangs F.

So sind Figur 7 insbesondere eine oberes Anschlussknoten-Paar K-K4 und ein unteres Anschlussknoten-Paar K-K4 zu entnehmen.

Figur 8 zeigt ein Knotenkonzept zur Verbindung eines Anschlussknoten-Paares (zweckmäßig benachbarte Anschlussknoten) für eine Fahrzeugkonstruktion 100 gemäß einer Ausführungsform der Erfindung. Die hierin offenbarten Anschlussknoten-Paare (z. B. K-K4, K4-K3, K3-K2, K2-K2 und/oder K2-K1) können vorzugsweise gemäß einem Knotenkonzept wie in Figur 8 gezeigt ausgeführt werden.

Das Knotenkonzept wird beispielhaft für ein oberes Anschlussknoten-Paar K-K4 für die Konsolen 60, 61 und die hintere Tragstruktur T4 beschrieben.

Eine Besonderheit des Knotenkonzepts ist, dass die benachbarten Anschlussknoten K, K4 und somit das Anschlussknoten-Paar K-K4 über eine Klemmverbindung lösbar miteinander verbunden sind.

Die Klemmverbindung umfasst zwei im Wesentlichen U- oder C-förmige Klemmbacken 10 und 11. Die benachbarten Anschlussknoten K, K4 bilden zur vorzugsweise passgenauen Anlage der Klemmbacken 10 und 11 zwei komplementär und somit ebenfalls im Wesentlichen U- oder C-förmig geformte Kulissen 13 und 14 zum sandwichförmigen Formschluss-Eingriff mit den Klemmbacken 10, 11 im Wesentlichen in Längsrichtung L der Fahrzeugkonstruktion 100.

Der Klemmbacken 11 bildet einen Formschluss 23 mit den benachbarten Anschlussknoten K, K4 im Wesentlichen in Höhenrichtung H der Fahrzeugkonstruktion 100. Der Formschluss 23 kann z. B. über zumindest einen sandwichförmigen Eingriff des Klemmbackens 11 mit den benachbarten Anschlussknoten K, K4 gebildet werden. Der Klemmbacken 10 kann optional ebenfalls einen derartigen Formschluss in Höhenrichtung H der Fahrzeugkonstruktion 100 bilden.

Die Klemmbacken 10, 11 sind über ein Spannelement 12 (z. B. eine zentrale Spannschraube) im Wesentlichen in Querrichtung Q der Fahrzeugkonstruktion 100 zueinander hin beaufschlagbar, wodurch die benachbarten Anschlussknoten K, K4 im Wesentlichen in Längsrichtung L der Fahrzeugkonstruktion 100 zueinander hin zu beaufschlagt werden können. Hierzu erzeugen die (vorzugsweise schräge Anlagenflächen aufweisenden) Kulissen 13, 14 mit den Klemmbacken 10,11 eine Kraftumlenkung, so dass die benachbarten Anschlussknoten K, K4 zueinander hin beaufschlagt werden können, insbesondere im Wesentlichen in Längsrichtung L der Fahrzeugkonstruktion 100.

Die benachbarten Anschlussknoten K, K4 bilden eine Durchlassöffnung 17 und 18 für das Spannelement 12, wobei das Spannelement 12 durch die Durchlassöffnung 17, 18 geführt ist und zwar vorzugsweise so, dass es die benachbarten Anschlussknoten K, K4 nicht kontaktiert. Auch Ausführungsformen mit zwei Spannelementen 12 sind möglich, z. B. jeweils ein Spannelement 12 pro Anschlussknoten K, K4.

Die Klemmbacken 10,11 erstrecken sich im Wesentlichen in Längsrichtung L der Fahrzeugkonstruktion 100, während sich das Spannelement 12 im Wesentlichen in Querrichtung Q der Fahrzeugkonstruktion 100 erstreckt.

Der Anschlussknoten K4 umfasst eine Anschlusseinrichtung 19 zum Anschließen eines in Figur 8 nur schematisch dargestellten Längsträgersegments 4.1 der Tragstruktur T4.

Der Anschlussknoten K umfasst ebenfalls eine Anschlusseinrichtung 20 zum Anschließen einer in Figur 8 nur schematisch dargestellten Konsole 60, wobei der Anschlussknoten K auch einstückig integraler Teil der Konsole 60 sein kann.

Der Anschlussknoten K4 kann darüber hinaus z. B. mehrere Anbindungsstrukturen 21 (z. B. Befestigungslöcher) zur Anbindung einer oder mehrerer Montagestrukturen aufweisen. Ebenso kann der Anschlussknoten K4 z. B. mehrere Anbindungsstrukturen 21 (z. B. Befestigungslöcher) zur Anbindung einer oder mehrerer Montagestrukturen aufweisen.

Die Montagestrukturen können z. B. Teil eines Fahrzeugaufbaus, Teil einer Fahrzeugbatterie und/oder Teil eines Fahrzeugtanks sein. Die Montagestrukturen können zweckmäßig an nur einen einzigen Anschlussknoten K, K4 montiert sein oder aber z. B. mittels Überbrückung des Spannelements 12 an beide, z. B. um die Struktursteifigkeit der benachbarten Anschlussknoten K, K4 zu erhöhen.

Die Anbindungsstrukturen 21, 22 können im Wesentlichen in Querrichtung Q und/oder in Höhenrichtung H der Fahrzeugkonstruktion 100 ausgerichtet sein und vorzugsweise zumindest ein Montageloch umfassen.

Im Einsatz der Fahrzeugkonstruktion 100 wird die Fahrzeugkonstruktion 100 in deren Höhenrichtung H üblicherweise auf- und ab-bewegt, wodurch in den Tragstrukturen T1, T2, T3, T4, insbesondere in deren Längsträgersegmenten, und den Längsträgern 50, 51 insbesondere Zug- und Druckkräfte erzeugt werden.

Zur Übertragung von im Einsatz der Fahrzeugkonstruktion 100 erzeugten Druckkräften können benachbarte Anschlussknoten K, K4 innenliegende Stirnseiten 15 und 16 aufweisen, die zweckmäßig auf Stoß aneinander liegen können und tragstrukturell miteinander in Verbindung bringbar sind.

Zur Übertragung von im Einsatz der Fahrzeugkonstruktion 100 erzeugten Zugkräften dienen insbesondere die Klemmbacken 10, 11. Die Klemmbacken 10, 11 sind somit vorzugsweise tragstruktureller Teil des Fahrzeug-Chassis. Die Klemmbacken 10,11 können insbesondere als tragstruktureller Bypass zur Umgehung des Spannelements 12 genutzt werden.

Die Anschlussknoten K der Konsolen 60, 61 können lösbar oder unlösbar an den Konsolen 60, 61 ausgebildet sein.

Es ist möglich, dass die Längsträgersegmente, Querträgersegmente und/oder Vertikalträgersegmente z. B. auch zweckmäßig schräg und somit nicht rechtwinklig zum Koordinatensystem L-Q-H verlaufen können. Es ist möglich, dass die Anschlussknoten z. B. lösbar an Längsträgersegmente, Querträgersegmente und/oder Vertikalträgersegmente der jeweiligen Tragstruktur zweckmäßig anmontiert sein können und somit z. B. Einzelbauteile darstellen können. Alternativ oder ergänzend ist es möglich, dass die Anschlussknoten z. B. unlösbar (z. B. einstückig-integral und/oder durch eine Schweißverbindung etc.) an Längsträgersegmenten, Querträgersegmenten und/oder Vertikalträgersegmenten der jeweiligen Tragstruktur zweckmäßig ausgebildet sein können und somit z. B. die Anschlussknoten und die Längsträgersegmente, die Querträgersegmente und/oder die Vertikalträgersegmente ein (z. B. im Wesentlichen knochenförmiges) Einzelbauteil bilden können. Im Kontext der Erfindung kann z. B. an einem ersten (zweckmäßig inneren) Knoten ein Stabelement (z. B. ähnlich einer Schraube, vorzugsweise mit Gewinde) ausgebildet sein, z. B. angegossen oder angeschmiedet sein. Außenseitig kann z. B. ein Gewinde ausgebildet sein und ein zweiter (zweckmäßig äußerer) Knoten kann zweckmäßig mit dem Stabelement verbunden werden.

### Bezugszeichenliste

- T1: Tragstruktur mit Vorderachse
- K1: Anschlussknoten

- T2: Tragstruktur
- K2: Anschlussknoten

- T3: Tragstruktur, vorzugsweise mit Triebachse
- K3: Anschlussknoten

- T4: hintere Tragstruktur, vorzugsweise mit Trieb- oder Nachlaufachse
- K4: Anschlussknoten
- 4.1 bis 4.4: Längsträgersegmente
- 4.9 bis 4.12: Vertikalträgersegmente

- 40: Vorderachse
- 41: Triebachse
- 42: Laufachse, vorzugsweise Vorlauf- oder Nachlaufachse

- F: hinterer Rahmenüberhang
- K: Anschlussknoten
- 50: Längsträger
- 51: Längsträger
- 60: Konsole
- 61: Konsole
- A: Anschlusskonstruktion
- B: Lager

- 10: Klemmbacke
- 11: Klemmbacke
- 12: Spannelement
- 13: Kulisse(n)
- 14: Kulisse(n)
- 15: Stirnseite
- 16: Stirnseite
- 17: Durchlassöffnung
- 18: Durchlassöffnung
- 19: Anschlusseinrichtung
- 20: Anschlusseinrichtung
- 21: Anbindungsstruktur
- 22: Anbindungsstruktur
- 23: Formschluss
- L: Längsrichtung der Fahrzeugkonstruktion
- Q: Querrichtung der Fahrzeugkonstruktion
- H: Höhenrichtung der Fahrzeugkonstruktion

- 100: Fahrzeugkonstruktion

## Patentansprüche

1. Fahrzeugkonstruktion (100), vorzugsweise mit einer Vielzahl von Tragstrukturen (T1, T2, T3, T4), die jeweils ein Fahrzeug-Chassis-Modul bilden, mit
- einer hinteren Tragstruktur (T4), die ein Fahrzeug-Chassis-Modul bildet, mehrere Anschlussknoten (K4) umfasst und an der eine Hinterachse (41, 42) montiert ist, vorzugsweise eine hinterste Hinterachse der Fahrzeugkonstruktion (100), und
- einem Rahmenüberhang (F) hinter der hinteren Tragstruktur (T4), **dadurch gekennzeichnet, dass** zumindest zwei Anschlussknoten-Paare (K4-K3, K3-K2, K2-K2) der Tragstrukturen (T4, T3, T2, T1) und/oder zumindest zwei Anschlussknoten-Paare (K-K4) von Konsolen (60, 61) und der hinteren Tragstruktur (T4) mittels jeweils einer Klemmverbindung lösbar miteinander verbunden sind und/oder über jeweils zumindest ein im Wesentlichen in Querrichtung (Q) der Fahrzeugkonstruktion (100) erstreckendes Spannelement (12) lösbar miteinander verbunden sind.

2. Fahrzeugkonstruktion (100) nach Anspruch 1, **dadurch gekennzeichnet, dass** der Rahmenüberhang (F) zwei Längsträger (51, 52) umfasst, die über mindestens zwei Konsolen (60, 61) an die hintere Tragstruktur (T4) angebunden sind.

3. Fahrzeugkonstruktion (100) nach Anspruch 1 oder 2, **dadurch gekennzeichnet, dass** der Rahmenüberhang (50) einen Leiterrahmen bildet und/oder die zwei Längsträger (51, 52) jeweils aus einem U-, I- oder L-Profil ausgebildet sind.

4. Fahrzeugkonstruktion (100) nach Anspruch 2 oder 3, **dadurch gekennzeichnet, dass** die zwei Konsolen (60, 61) jeweils eine nach hinten abstehende Anschlusskonstruktion (A) aufweisen, an die jeweils einer der Längsträger (50, 51) befestigt ist, vorzugsweise angeschraubt, angenietet oder angeschweißt ist.

5. Fahrzeugkonstruktion (100) nach einem der Ansprüche 2 bis 4, **dadurch gekennzeichnet, dass** die zwei Konsolen (60, 61) für die zwei Längsträger (50, 51) jeweils ein Lager (B) zur Bildung eines Formschlusses aufweisen und vorzugsweise an die zwei Lager (B) jeweils einer der Längsträger (50, 51) angeschraubt oder angeschweißt.

6. Fahrzeugkonstruktion (100) nach einem der Ansprüche 2 bis 5, **dadurch gekennzeichnet, dass** zwischen den Konsolen (60, 61), vorzugsweise zwischen den Anschlusskonstruktionen (A), ein Querträger (70) verläuft, vorzugsweise zur Verbindung der zwei Längsträger (50, 51) und/oder der zwei Konsolen (60, 61).

7. Fahrzeugkonstruktion (100) nach einem der Ansprüche 2 bis 6, **dadurch gekennzeichnet, dass** die Konsolen (60, 61) von den zwei Längsträgern (50, 51) nach unten abstehen und/oder sich nach unten verjüngen.

8. Fahrzeugkonstruktion (100) nach einem der vorhergehenden Ansprüche, **dadurch gekennzeichnet, dass** der Rahmenüberhang (F) eine Länge im Wesentlichen in Längsrichtung (L) der Fahrzeugkonstruktion (100) aufweist und die hintere Tragstruktur (T4) eine Länge im Wesentlichen in Längsrichtung der Fahrzeugkonstruktion (100) aufweist und die Länge des Rahmenüberhangs (F) im Vergleich zur Länge der hinteren Tragstruktur (T4) größer, gleich oder kleiner ist.

9. Fahrzeugkonstruktion (100) nach einem der vorhergehenden Ansprüche, **dadurch gekennzeichnet, dass** die Fahrzeugkonstruktion (100) eine Vielzahl von Tragstrukturen (T4, T3, T2, T1) umfasst, die jeweils ein Fahrzeug-Chassis-Modul bilden, die jeweils mehrere Anschlussknoten (K4, K3, K2, K1) aufweisen und die jeweils über, vorzugsweise vier, Anschlussknoten-Paare (K4-K3, K3-K2, K2-K2, K2-K1) vorzugsweise lösbar miteinander verbunden sind.

10. Fahrzeugkonstruktion (100) nach einem der vorhergehenden Ansprüche, **dadurch gekennzeichnet, dass** die zwei Konsolen (60, 61) jeweils zumindest zwei oder zumindest drei Anschlussstellen zum Anschließen jeweils eines Anschlussknotens (K4) der hinteren Tragstruktur (T4) zur Verfügung stellen.

11. Fahrzeugkonstruktion (100) nach einem der vorhergehenden Ansprüche, **dadurch gekennzeichnet, dass** die Konsolen (60, 61) und die hintere Tragstruktur (T4) über, vorzugsweise zumindest zwei oder zumindest vier, Anschlussknoten-Paare (K-K4) lösbar miteinander verbunden sind.

12. Fahrzeugkonstruktion (100) nach einem der vorhergehenden Ansprüche, **dadurch gekennzeichnet, dass** die Klemmverbindung jeweils zwei Klemmbacken (10, 11) und/oder zumindest ein vorzugsweise im Wesentlichen in Querrichtung (Q) der Fahrzeugkonstruktion (100) erstreckendes Spannelement (12) umfasst.

13. Fahrzeugkonstruktion (100) nach Anspruch 12, **dadurch gekennzeichnet, dass** die zwei Klemmbacken (10, 11) über das Spannelement (12) zueinander hin beaufschlagbar sind, wobei das Spannelement (12) die zwei Klemmbacken (10, 11) im Wesentlichen in Querrichtung (Q) der Fahrzeugkonstruktion (100) zueinander hin beaufschlagt und/oder wobei die zwei Klemmbacken (10, 11) die Anschlussknoten-Paare (K4-K3, K3-K2, K2-K2, K2-K1) jeweils im Wesentlichen in Längsrichtung (L) der Fahrzeugkonstruktion (100) zueinander hin beaufschlagt.

14. Fahrzeugkonstruktion (100) nach einem der vorhergehenden Ansprüche, **dadurch gekennzeichnet, dass** Längsträgersegmente der Tragstrukturen (T1, T2, T3, T4) und die Längsträger (50, 51) beidseitig über Anschlussknoten-Paare (K-K4, K4-K3, K3-K2, K2-K2, K2-K1) miteinander verbunden sind und im Wesentlichen in Querrichtung (Q) der Fahrzeugkonstruktion (100) voneinander beabstandete Chassis-Längsträgerkonstruktionen bilden.

15. Fahrzeugkonstruktion (100) nach einem der vorhergehenden Ansprüche, **dadurch gekennzeichnet, dass**
- die Hinterachse (41, 42) als Triebachse (41) oder Laufachse (42) ausgebildet ist, und/oder
- zwischen einer eine Vorderachse (40) aufweisenden Tragstruktur (T1) und der die Hinterachse (41, 42) aufweisenden Tragstruktur (T4) zumindest eine weitere ein Fahrzeug-Chassis-Modul bildende Tragstruktur (T2, T3) angeordnet ist.

16. Fahrzeugkonstruktion (100) nach einem der Ansprüche 2 bis 15, **dadurch gekennzeichnet, dass** die Konsolen (60, 61) jeweils als Guss-, Blech- oder Schmiedekonstruktion ausgebildet sind.

17. Nutzfahrzeug, vorzugsweise Lastkraftwagen, mit einer Fahrzeugkonstruktion (100) nach einem der vorhergehenden Ansprüche.

## Claims

1. Vehicle construction (100), preferably with a multiplicity of load-bearing structures (T1, T2, T3, T4) which in each case form a vehicle chassis module, with
- a rear load-bearing structure (T4) which forms a vehicle chassis module, comprises a plurality of connection nodes (K4), and on which a rear axle (41, 42) is mounted, preferably a rearmost rear axle of the vehicle construction (100), and
- a frame overhang (F) behind the rear load-bearing structure (T4), **characterized in that** at least two connection node pairs (K4-K3, K3-K2, K2-K2) of the load-bearing structures (T4, T3, T2, T1) and/or at least two connection node pairs (K-K4) of brackets (60, 61) and the rear load-bearing structure (T4) are connected releasably to one another by means of in each case one clamping connection and/or are connected releasably to one another via in each case at least one clamping element (12) which extends substantially in the transverse direction (Q) of the vehicle construction (100).

2. Vehicle construction (100) according to Claim 1, **characterized in that** the frame overhang (F) comprises two longitudinal beams (51, 52) which are attached via at least two brackets (60, 61) to the rear load-bearing structure (T4).

3. Vehicle construction (100) according to Claim 1 or 2, **characterized in that** the frame overhang (50) forms a ladder frame, and/or the two longitudinal beams (51, 52) are configured in each case from a U beam, double-T beam or L beam.

4. Vehicle construction (100) according to Claim 2 or 3, **characterized in that** the two brackets (60, 61) in each case have a rearwardly projecting connector construction (A), to which in each case one of the longitudinal beams (50, 51) is fastened, preferably screwed, riveted or welded.

5. Vehicle construction (100) according to one of Claims 2 to 4, **characterized in that** the two brackets (60, 61) for the two longitudinal beams (50, 51) in each case have a mount (B) for forming a positively locking connection, and in each case one of the longitudinal beams (50, 51) is preferably screwed or welded to the two mounts (B).

6. Vehicle construction (100) according to one of Claims 2 to 5, **characterized in that** a crossmember (70) runs between the brackets (60, 61), preferably between the connector constructions (A), preferably for the connection of the two longitudinal beams (50, 51) and/or the two brackets (60, 61).

7. Vehicle construction (100) according to one of Claims 2 to 6, **characterized in that** the brackets (60, 61) project downwards and/or taper downwards from the two longitudinal beams (50, 51).

8. Vehicle construction (100) according to one of the preceding claims, **characterized in that** the frame overhang (F) has a length substantially in the longitudinal direction (L) of the vehicle construction (100), and the rear load-bearing structure (T4) has a length substantially in the longitudinal direction of the vehicle construction (100), and the length of the frame overhang (F) is greater than, equal to or less than the length of the rear load-bearing structure (T4).

9. Vehicle construction (100) according to one of the preceding claims, **characterized in that** the vehicle construction (100) comprises a multiplicity of load-bearing structures (T4, T3, T2, T1) which in each case form a vehicle chassis module, which in each case have a plurality of connector nodes (K4, K3, K2, K1), and which are in each case connected to one another, preferably releasably, via (preferably four) connector node pairs (K4-K3, K3-K2, K2-K2, K2-K1).

10. Vehicle construction (100) according to one of the preceding claims, **characterized in that** the two brackets (60, 61) in each case provide at least two or at least three connector points for connecting in each case one connector node (K4) of the rear load-bearing structure (T4) .

11. Vehicle construction (100) according to one of the preceding claims, **characterized in that** the brackets (60, 61) and the rear load-bearing structure (T4) are connected releasably to one another via (preferably at least two or at least four) connector node pairs (K-K4).

12. Vehicle construction (100) according to one of the preceding claims, **characterized in that** the clamping connection comprises in each case two clamping jaws (10, 11) and/or at least one clamping element (12) which preferably extends substantially in the transverse direction (Q) of the vehicle construction (100).

13. Vehicle construction (100) according to Claim 12, **characterized in that** the two clamping jaws (10, 11) can be loaded towards one another via the clamping element (12), the clamping element (12) loading the two clamping jaws (10, 11) towards one another substantially in the transverse direction (Q) of the vehicle construction (100), and/or the two clamping jaws (10, 11) loading the connector node pairs (K4-K3, K3-K2, K2-K2, K2-K1) towards one another in each case substantially in the longitudinal direction (L) of the vehicle construction (100) .

14. Vehicle construction (100) according to one of the preceding claims, **characterized in that** longitudinal beam segments of the load-bearing structures (T1, T2, T3, T4) and the longitudinal beams (50, 51) are connected to one another on both sides via connector node pairs (K-K4, K4-K3, K3-K2, K2-K2, K2-K1), and form chassis longitudinal beam constructions which are spaced apart from one another substantially in the transverse direction (Q) of the vehicle construction (100).

15. Vehicle construction (100) according to one of the preceding claims, **characterized in that**
- the rear axle (41, 42) is configured as a drive axle (41) or running axle (42), and/or
- at least one further load-bearing structure (T2, T3) which forms a vehicle chassis module is arranged between a load-bearing structure (T1), having a front axle (40), and the load-bearing structure (T4), having the rear axle (41, 42).

16. Vehicle construction (100) according to one of Claims 2 to 15, **characterized in that** the brackets (60, 61) are configured in each case as a cast, sheet-metal or forged construction.

17. Utility vehicle, preferably lorry, with a vehicle construction (100) according to one of the preceding claims.

## Revendications

1. Structure de véhicule (100), de préférence comportant une pluralité de structures porteuses (T1, T2, T3, T4) qui forment respectivement un module de châssis de véhicule, comportant
- une structure porteuse arrière (T4) qui forme un module de châssis de véhicule, comprend plusieurs nœuds de raccordement (K4) et sur laquelle est monté un essieu arrière (41, 42), de préférence un essieu arrière le plus à l'arrière de la structure de véhicule (100), et
- un porte-à-faux de cadre (F) derrière la structure porteuse arrière (T4), **caractérisée en ce qu'**au moins deux paires de nœuds de raccordement (K4-K3, K3-K2, K2-K2) des structures porteuses (T4, T3, T2, T1) et/ou au moins deux paires de nœuds de raccordement (K-K4) de consoles (60, 61) et de la structure porteuse arrière (T4) sont reliées les unes aux autres de manière amovible respectivement au moyen d'une liaison serrée et/ou sont reliées les unes aux autres de manière amovible respectivement par le biais d'au moins un élément de serrage (12) s'étendant sensiblement dans la direction transversale (Q) de la structure de véhicule (100).

2. Structure de véhicule (100) selon la revendication 1, **caractérisée en ce que** le porte-à-faux de cadre (F) comprend deux longerons (51, 52) qui sont connectés à la structure porteuse arrière (T4) par le biais d'au moins deux consoles (60, 61).

3. Structure de véhicule (100) selon la revendication 1 ou 2, **caractérisée en ce que** le porte-à-faux de cadre (50) forme un cadre en forme d'échelle et/ou les deux longerons (51, 52) sont réalisés respectivement à partir d'un profilé en U, en I ou en L.

4. Structure de véhicule (100) selon la revendication 2 ou 3, **caractérisée en ce que** les deux consoles (60, 61) présentent respectivement une structure de raccordement (A) faisant saillie vers l'arrière, sur laquelle respectivement l'un des longerons (50, 51) est fixé, de préférence vissé, riveté ou soudé.

5. Structure de véhicule (100) selon l'une des revendications 2 à 4, **caractérisée en ce que** les deux consoles (60, 61) pour les deux longerons (50, 51) présentent respectivement un support (B) pour la formation d'un engagement par complémentarité de formes et respectivement l'un des longerons (50, 51) est vissé ou soudé de préférence sur les deux supports (B).

6. Structure de véhicule (100) selon l'une des revendications 2 à 5, **caractérisée en ce qu'**une traverse (70) s'étend entre les consoles (60, 61), de préférence entre les structures de raccordement (A), de préférence pour la liaison des deux longerons (50, 51) et/ou des deux consoles (60, 61).

7. Structure de véhicule (100) selon l'une des revendications 2 à 6, **caractérisée en ce que** les consoles (60, 61) font saillie vers le bas à partir des deux longerons (50, 51) et/ou se rétrécissent vers le bas.

8. Structure de véhicule (100) selon l'une des revendications précédentes, **caractérisée en ce que** le porte-à-faux de cadre (F) présente une longueur sensiblement dans la direction longitudinale (L) de la structure de véhicule (100) et la structure porteuse arrière (T4) présente une longueur sensiblement dans la direction longitudinale de la structure de véhicule (100) et la longueur du porte-à-faux de cadre (F) est, par comparaison avec la longueur de la structure porteuse arrière (T4), supérieure, égale ou inférieure à celle-ci.

9. Structure de véhicule (100) selon l'une des revendications précédentes, **caractérisée en ce que** la structure de véhicule (100) comprend une pluralité de structures porteuses (T4, T3, T2, T1) qui forment respectivement un module de châssis de véhicule, qui présentent respectivement plusieurs nœuds de raccordement (K4, K3, K2, K1) et qui sont reliées les unes aux autres de préférence de manière amovible respectivement de préférence par le biais de quatre paires de nœuds de raccordement (K4-K3, K3-K2, K2-K2, K2-K1).

10. Structure de véhicule (100) selon l'une des revendications précédentes, **caractérisée en ce que** les deux consoles (60, 61) fournissent respectivement au moins deux ou au moins trois points de raccordement pour le raccordement respectivement d'un nœud de raccordement (K4) de la structure porteuse arrière (T4).

11. Structure de véhicule (100) selon l'une des revendications précédentes, **caractérisée en ce que** les consoles (60, 61) et la structure porteuse arrière (T4) sont reliées les unes aux autres de manière amovible de préférence par le biais d'au moins deux ou d'au moins quatre paires de nœuds de raccordement (K-K4).

12. Structure de véhicule (100) selon l'une des revendications précédentes, **caractérisée en ce que** la liaison serrée comprend respectivement deux mâchoires de serrage (10, 11) et/ou au moins un élément de serrage (12) s'étendant de préférence sensiblement dans la direction transversale (Q) de la structure de véhicule (100) .

13. Structure de véhicule (100) selon la revendication 12, **caractérisée en ce que** les deux mâchoires de serrage (10, 11) peuvent être sollicitées l'une vers l'autre par le biais de l'élément de serrage (12), l'élément de serrage (12) sollicitant les deux mâchoires de serrage (10, 11) l'une vers l'autre sensiblement dans la direction transversale (Q) de la structure de véhicule (100) et/ou les deux mâchoires de serrage (10, 11) sollicitant les paires de nœuds de raccordement (K4-K3, K3-K2, K2-K2, K2-K1) les unes vers les autres respectivement sensiblement dans la direction longitudinale (L) de la structure de véhicule (100).

14. Structure de véhicule (100) selon l'une des revendications précédentes, **caractérisée en ce que** des segments de longeron des structures porteuses (T1, T2, T3, T4) et les longerons (50, 51) sont reliés les uns aux autres de manière bilatérale par le biais de paires de nœuds de raccordement (K-K4, K4-K3, K3-K2, K2-K2, K2- K1) et forment des structures de longeron de châssis espacées les unes des autres sensiblement dans la direction transversale (Q) de la structure de véhicule (100).

15. Structure de véhicule (100) selon l'une des revendications précédentes, **caractérisée en ce que**
- l'essieu arrière (41, 42) est réalisé sous forme d'essieu moteur (41) ou d'essieu porteur (42), et/ou
- au moins une autre structure porteuse (T2, T3) formant un module de châssis de véhicule est disposée entre une structure porteuse (T1) présentant un essieu avant (40) et la structure porteuse (T4) présentant l'essieu arrière (41, 42).

16. Structure de véhicule (100) selon l'une des revendications 2 à 15, **caractérisée en ce que** les consoles (60, 61) sont formées respectivement sous forme de structure en fonte, en tôle ou forgée.

17. Véhicule utilitaire, de préférence poids lourd, comportant une structure de véhicule (100) selon l'une des revendications précédentes.
